(19) Europäisches Patentamt
European Patent Office
Office européen des brevets

(11) Publication number: 0 223 217 A2

(12) # EUROPEAN PATENT APPLICATION

(21) Application number: 86115874.9

(22) Date of filing: 14.11.86

(51) Int. Cl.⁴: C 08 J 3/08, C 08 L 33/14

(30) Priority: 18.11.85 JP 259151/85

(43) Date of publication of application: 27.05.87 Bulletin 87/22

(84) Designated Contracting States: CH DE FR GB IT LI NL

(71) Applicant: Takeda Chemical Industries, Ltd., 27, Doshomachi 2-chome Higashi-ku, Osaka-shi Osaka, 541 (JP)

(72) Inventor: Nakayama, Takeo, K-605, 5 Ten-noh 2-chome, Ibaraki Osaka 567 (JP)
Inventor: Sakamoto, Takurou, 6-8, Minamihanayashiki 3-chome, Kawanishi Hyogo 666 (JP)
Inventor: Doura, Fumihiro, 33-6, Miikedai 1-cho, Sakai Osaka 590-01 (JP)

(74) Representative: von Kreisler, Alek, Dipl.-Chem. et al, Deichmannhaus am Hauptbahnhof, D-5000 Köln 1 (DE)

(54) **Stabilized resin solutions.**

(57) A stabilized solution of a copolymer composed of an aminoalkyl acrylate unit or aminoalkyl methacrylate unit and an ethylenically unsaturated monomer unit, which is prepared by dissolving the copolymer in a mixed solvent containing a ketone solvent in a ratio of about 20 to 80wt.% to the total solvent weight.

The stabilized solution possesses highly improved storage stability, thus standing long-term storage; it works well for paints, adhesives, primers, etc.

Its adhesive property to various substances is further improved by adding a coupling agent. In addition, a paint film excellent in adhesion, water resistance, chemical resistance, and weatherproofness can be obtained by using both the stabilized solution of the base copolymer and either a compound having at least 2 acryloyl groups in each molecule, a blocked polyisocyanate compound, or an epoxy compound as a hardener.

EP 0 223 217 A2

# Stabilized Resin Solutions

This invention relates to a stabilized solution, specifically a stabilized solution of a copolymer composed of an aminoalkyl acrylate unit or aminoalkyl methacrylate unit and an ethylenically unsaturated monomer unit.

A copolymer composed of an aminoalkyl acrylate unit or aminoalkyl methacrylate unit and an ethylenically unsaturated monomer unit is produced by converting a carboxyl group to an amino-substituted ester group via reaction between a vinyl addition polymer containing free carboxyl groups, produced by polymerizing at least 2 copolymerizable ethylenically unsaturated monomers at least one of which contains a free carboxyl group either in a mixture of isopropyl alcohol and toluene in a ratio of about 30/70 by weight or in toluene, and an alkylenimine having 2 to 3 carbon atoms in the ring. However, it was found that when stored at 40°C for 6 months, the solution (solid content: 35wt.%) of a copolymer produced using either a mixture of isopropyl alcohol and toluene or toluene alone exhibits viscosity more than 3 times the initial viscosity, i.e., it proved extremely low in storage stability.

While studying various methods, the present inventors found that the stability of a resin solution is highly improved by replacing a part of a mixed solvent consisting of an aromatic hydrocarbon solvent and an alcoholic solvent, usually employed for the production of said copolymer, with a ketone solvent in a specified ratio, and developed this invention based on this finding.

That is, this invention relates to a stabilized solution, which is prepared by dissolving a copolymer composed of an aminoalkyl acrylate unit or aminoalkyl methacrylate unit and an ethylenically unsaturated monomer unit in a mixed solvent containing a ketone

solvent in a ratio of about 20 to 80wt.% to the total solvent weight.

Copolymers which are composed of an aminoalkyl acrylate unit or aminoalkyl methacrylate unit and an ethylenically unsaturated monomer unit and which are used for this invention have the following formula:

$$\begin{array}{l} \qquad\quad R^1 \\ \qquad\quad | \\ CH_2 = C \\ \qquad\quad | \\ \qquad\quad COOR^2NHR^3 \end{array}$$

wherein $R^1$ represents either a hydrogen atom or a methyl group,

$R^2$ represents either an alkylene or hydroxy-alkeylene group having 1 to 6 carbon atoms, and

$R^3$ represents either a hydrogen atom or an alkyl group having 1 to 6 carbon atoms.

Aminoalkyl acrylates or aminoalkyl methacrylates which can be used include acrylates such as aminoethyl acrylate, aminopropyl acrylate, amino-n-butyl acrylate, aminohexyl acrylate, N-methylaminoethyl acrylate, N-tert butyl-aminoethyl acrylate and aminohydroxypropyl acrylate; and methacrylates such as aminoethyl methacrylate, amino-n-butyl methacrylate, N-methylaminoethyl methacrylate, N-tert-butylaminoethyl methacrylate and aminohydroxypropyl methacrylate. These aminoalkyl acrylates or aminoalkyl methacrylates are contained in the said copolymer in a ratio usually of about 1 to 40wt.%, preferably of about 2 to 20wt.%.

Ethylenically unsaturated monomers which can be used include acrylates such as methyl acrylate, ethyl acrylate, n-butyl acrylate and 2-ethylhexyl acrylate; methacrylates such as methyl methacrylate, ethyl methacrylate and n-butyl methacrylate; vinyl esters of fatty acid such as vinyl acetate and vinyl propionate;

aliphatic monoolefins such as ethylene, propylene and isobutene; aromatic monoolefins such as styrene and vinyltoluene; acrylonitrile; vinyl chloride; and vinyl fluoride. It is preferable that the said copolymer be composed mainly of acrylates or methacrylates from the point of view of weatherproofness, resistance to yellowing, etc. The monomers shown above can be contained in the said copolymer either singly or in combination; their content are about 60 to 99wt.%, preferably about 80 to 98 wt.%.

A copolymer composed of an aminoalkyl acrylate unit or aminoalkyl methacrylate unit and an ethylenically unsaturated monomer unit is produced by reacting an alkylenimine to a polymer containing carboxyl groups, produced by polymerizing an acrylate or methacrylate unit containing a carboxyl group, represented by the formula:

$$CH_2=\underset{\substack{|\\ COOH}}{\overset{\substack{R^1\\ |}}{C}}$$

wherein $R^1$ is of the same meaning as defined above and an ethylenically unsaturated monomer unit in the presence of either an aromatic hydrocarbon such as toluene, an alcohol such as isopropanol, or an ester such as ethyl acetate as a solvent by the ordinary method using an either azobis- or peroxidic radical polymerization initiator and if necessary, in combination with a mercaptan as a chain transfer agent. It can also be produced by reacting either ammonia or a primary amine to a polymer having oxirane groups $\underset{\diagdown\,O\,\diagup}{-C-C-}$ in place of the previous polymer having carboxyl groups.

A copolymer composed of an ethylenically unsaturated monomer unit and an aminoalkyl acrylate unit

or aminoalkyl methacrylate unit, obtained as above, has at least 2 amino groups in each molecule; its weight-average molecular weight is about 1,000 to 1,000,000, preferably about 5,000 to 500,000.

After the completion of the reaction, a part of the copolymer solution is replaced with a ketone solvent. This procedure can be carried out by adding a calculated quantity of a ketone solvent after removing the solvent for the copolymer to a specified solid content by heating the copolymer solution under reduced pressure after the completion of the reaction. A ketone solvent is used in a ratio of about 20 to 80 wt.%, preferably about 30 to 70 wt.%, to the total solvent weight. When it is used in a ratio of over 80 wt.%, it is necessary to almost completely remove the solvent used for the copolymerization. If the ratio is less than 20wt.%, insufficient stabilizing effect will be obtained.

The solid content of the said copolymer solution is about 20 to 80wt.%, preferably about 30 to 50wt.%.

Ketone solvents which can be used for this invention include aliphatic ketones such as acetone, methyl ethyl ketone, diethyl ketone, methyl isobutyl ketone, methyl n-amyl ketone, ethyl butyl ketone, methyl hexyl ketone, diisobutyl ketone, trimethyl nonanone, mesityl oxide, acetonyl acetone, diacetone alcohol and 2,4-pentanedione; alicyclic ketones such as cyclohexanone and isophorone; and acetophenone. These ketone solvents can be used either singly or in combination. The use of either methyl isobutyl ketone or methyl ethyl ketone is particularly preferable.

Substances which can also be used as a solvent other than a ketone solvent include alcohols such as methyl alcohol, ethyl alcohol, n-propyl alcohol, isopropyl alcohol, n-butyl alcohol, t-butyl alcohol, n-amyl alcohol and higher alkyl alcohols; esters such as methyl formate, ethyl formate, methyl acetate, ethyl

acetate, isopropyl acetate, n-butyl acetate, iso-butyl acetate and higher alkyl acetates; and aromatic hydrocarbons such as benzene, toluene, xylene and ethylbenzene.

Stabilized solutions obtained in the above can be used singly for paints, adhesives, primers, etc., but the use of a coupling agent etc. is recommended because their adhesion to the base material is improved. The said stabilized solution can also be used as a base copolymer in combination with a hardener such as a compound having at least 2 acryloyl groups per molecule, a blocked polyisocyanate compound, or an epoxy compound.

Coupling agents are compounds reacting on the interface between an organic material and an inorganic material to allow the two materials form a strong bridge via an either chemical or physical bond. Coupling agents which can be used include compounds of silicon, titanium, alminum, etc., having a group which can combine an organic material and an inorganic material.

Silicon compounds which can be used as a coupling agent include silane coupling agents represented by the general formula:

$$R^1 \cdot Si \cdot R^2_a R^3_{3-a}$$

wherein $R^1$ represents either a chlorine atom or an either an alkyl group having 1 to 6 carbon atoms and a functional group such as a chlorine atom or an amino group, an ureido group, a glycidoxy group, an acryloxy group, a methacryloxy group and mercapto group, or a vinyl group.

$R^2$ and $R^3$ each represent either a chlorine atom, a hydroxyl group, or an alkoxy group having 1 to 6 carbon atoms, and

$\underline{a}$ represents either 0, 1 or 2. Such silane compounds which work well include γ-chloropropyltrimethoxysilane, γ-aminopropyltriethoxysilane, N-β-aminoethyl-γ-aminopropyltrimethoxysilane,

γ-glycidoxypropyltrimethoxysilane, γ-methacryloxypropyltrimethoxysilane, γ-mercaptopropyltrimethoxysilane, vinyltriethoxysilane, vinyltrichlorosilane and vinyltriacetoxysilane.

Titanium compounds which can be used as a coupling agent include tetraisopropyl titanate, tetraoctylene glycol titanate, isopropyltristearoyl titanate, isopropyltris (di-octylpyrrophosphate) titanate, tetraisopropylbis (dioctylphosphite) oxyacetate titanate, bis (dioctyl pyrrophosphate)oxy-acetate titanate.

Aluminum compounds which can be used as a coupling agent include aluminum isopropylate, mono-sec-butoxyalminum diisopropylate, aluminum acetylacetonate, aluminum oxyoctate and aluminumdiisopropoxydomonoethyl acetoacetate.

These coupling agents are added to a weight ratio of about 50 parts, preferably 0.5 to 20 parts, to 100 parts of the copolymer. The use of a silane coupling agent is particularly preferable from the point of view of water resistance.

Compounds which have at least 2 acryloyl groups in each molecule and which can be used as a hardener for this invention include diacrylates such as ethylene glycol diacrylate, propylene glycol diacrylate, tetramethylene glycol diacrylate, hexamethylene glycol diacrylate and bisacryloyloxyethyl hydroxyethyl isocyanurate; triacrylates such as glycerol triacrylate, trimethylolpropane triacrylate, pentaerythritol triacrylate and trisacryloyloxyethyl isocyanurate; tetraacrylates such as pentaerythritol tetraacrylate; urethane acrylates composed of aliphatic or alicyclic diisocyanates or a polyisocyanate obtained via reaction between an excess aliphatic or alicyclic diisocyanates and an active hydrogen compound of low molecular weight, such as trimethylpropane, triethanolamine or water, with an acrylate such as hydroxyethyl acrylate or

hydroxypropyl acrylate; acrylamides such as methylenebisacrylamide and bisacrylamide methyl ether; compounds produced by reacting acrylic acid to an epoxy containing compound, such as acrylic acid adduct of ethylene glycol diglycidyl ether, acrylic acid adduct of glycerol diglycidyl ether, acrylic acid adduct of bisphenol A diglycidyl ether and acrylic acid adduct of o-cresol novolak polyglycidyl ether; and polyester acrylates such as the diacrylate of polyesterdiol of succinic acid and propylene glycol, the diacrylate of polyesterdiol of phthalic acid and diethylene glycol, the diacrylate of polyesterdiol of tetrahydrophthalic acid and diethylene glycol, and the polyacrylate of polyesterpolyol of adipic acid and trimethylolpropane, or propylene glycol.

Molecular weight per acryloyl group is less than 1,000.

Of the compounds shown above, those having a molecular weight of 80 to 300 are particularly preferable.

These compounds can be used either singly or in combination.

It is recommended that the mixing ratio of the base copolymer to a hardener be as follows:

$$\frac{\text{Number of hydrogen atoms in each amino group in the base copolymer}}{\text{Number of acryloyl groups in the hardener}} = \text{about } 0.3 \text{ to } 5,$$

preferably about 0.5 to 2.

Polyisocyanates to be used for a blocked polyisocyanate compound as a hardener include aliphatic diisocyanates such as trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, 2,4,4- or 2,2,4-trimethylhexamethylene diisocyanate, dodecamethylene diisocyanate and 2,6-diisocyanatomethyl

caproate; cycloalkylene diisocyanates such as 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis-(cyclohexylisocyanate), methyl-2,4-cyclohexane diisocyanate, methyl-2,6-cyclohexane diisocyanate, 1,4-bis(isocyanatomethyl) cyclohexane and 1,3-bis(isocyanatomethyl) cyclohexane; aromatic diisocyanates such as m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate, dianisidine diisocyanate and 4,4'-diphenyl ether diisocyanate; aromatic aliphatic diisocyanates such as ω,ω'-diisocyanato-1,3-dimethylbenzene, ω,ω'-diisocyanato-1,4-dimethylbenzene, ω,ω'-diisocyanato-1,4-diethylbenzene, 1,3-tetramethylxylylene diisocyanate and 1,4-tetramethylxylylene diisocyanate; triisocyanates such as triphenylmethane-4,4',4"-triisocyanate, 1,3,5-triisocyanatobenzene, 1,3,5-triisocyanatocyclohexane, 2,4,6-triisocyanatotoluene and ω-isocyanatoethyl-2,6-diisocyanatocaproate; tetraisocyanates such as 4,4'-diphenyldimethylmethane-2,2',5,5'- tetraisocyanate; and polyisocyanates obtained via reaction between an excess amount either of a polymerized isocyanate (dimer, trimer, etc.) composed of diisocyanate monomers, of polymethylenepolyphenyl polyisocyanate, or of one of the isocyanate compounds shown above, the either an active hydrogen compound of low molecular weight such as ethylene glycol, propylene glycol, dipropylene glycol, diethylene glycol, triethylene glycol, 2,2,4-trimethyl-1,3-pentanediol, neopentyl glycol, hexanediol, cyclohexanedimethanol, cyclohexanediol, hydrogenated bisphenol A, xylylene glycol, glycerol, trimethylolethane, trimethylolpropane, hexanetriol, pentaerythritol, sorbitol, sucrose, castor oil, ethylenediamine, hexamethylenediamine, ethanolamine,

diethanolamine, triethanolamine, water, ammonia or urea, or an active hydrogen compound of high molecular weight such as polyetherpolyol, polyesterpolyol, acrylpolyol or epoxypolyol, or allophanates and biuretized compounds of these polyisocyanates.

These isocyanate compounds can be used either singly or in combination.

Compounds which can be used as a blocking agent for the polyisocyanates described above include those known to be utilized in the blocking of isocyanates, such as phenols, lactams, active methylenes, alcohols, mercaptanes, acid amides, imides, amines, imidazoles, urea compounds, carbamates, imines, oximes and sulfites; of these compounds, phenols, oximes, lactams, imines, etc. can work well as a blocking agent.

When used in combination with the base copolymer, a polyisocyanate compound blocked with a phenol-based blocking agent hardens at extremely low temperature, i.e. about 50 to 100°C. Those with oxime- or lactam-based blocking agents harden at about 90 to 120°C, being excellent in both storage stability and film properties. Those with alcohol based blocking agents harden at about 120 to 140°C; they are also excellent in both storage stability and film properties. In more detail, the following substances can be used as a blocking agent:

Phenol based blocking agents:

Phenol, cresol, xylenol, nitrophenol, chlorophenol, ethylphenol, p-hydroxydiphenyl, t-butylphenol, o-isopropylphenol, o-sec-butylphenol, p-nonylphenol, p-t-octylphenol, hydroxybenzoic acid, hydroxybenzoic esters, etc.

Lactam based blocking agents:

ε-caprolactam, δ-valerolactam, γ-butyrolactam, β-propiolactam, etc.

Active methylene based blocking agents:

Diethyl malonate, dimethyl malonate, ethyl acetoacetate, methyl acetoacetate, acetylacetone, etc.

Alcohol based blocking agents:

Methanol, ethanol, n-propyl alcohol, isopropyl alcohol, n-butyl alcohol, isobutyl alcohol, t-butyl alcohol, n-amyl alcohol, t-amyl alcohol, lauryl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, benzyl alcohol, methoxy methanol, glycolic acid, glycolic esters such as methyl glycolate, ethyl glycolate and butyl glycolate, lactic acid, lactic esters such as methyl lactate, ethyl lactate and butyl lactate, methylolurea, methylolmelamine, diacetone alcohol, ethylene chlorohydrin, ethylene bromohydrin, 1,3-dichloro-2-propanol, ω-hydroperfluoro alcohol, acetone cyanhydrin, etc.

Mercaptan based blocking agents:

Butylmercaptan, hexylmercaptan, t-butylmercaptan, t-dodecylmercaptan, 2-mercaptobenzothiazole, thiophenol, methylthiophenol, ethylthiophenol, etc.

Acid amide based blocking agents:

Acetanilide, acetanisidide, acetotoluide, acrylamide, methacrylamide, acetamide, stearamide, benzamide, etc.

Imide based blocking agents:

Succinimide, phthalimide, maleimide, etc.

Amine based blocking agents:

Diphenylamine, phenylnaphthylamine, xylidine,

N-phenylxylidine, carbazole, aniline, naphthylamine, butylamine, dibutylamine, butylphenylamine, etc.

Imidazole based blocking agents:
Imidazole, 2-ethylimidazole, etc.

Urea based blocking agents:
Urea, thiourea, ethyleneurea, ethylenethiourea, 1,3-diphenylurea, etc.

Carbamate based blocking agents:
Phenyl N-phenylcarbamate, 2-oxazolidone, etc.

Imine based blocking agents:
Ethylenimine, propylenimine, etc.

Oxime based blocking agents:
Formamidoxime, acetaldoxime, acetoxime, methylethylketoxime, diacetylmonoxime, benzophenoneoxime, cyclohexanoxime, etc.

Sulfite based blocking agents:
Sodium sulfite, potassium sulfite, etc.

The production of blocked polyisocyanate compounds is carried out by allowing the above-mentioned polyisocyanate and blocking agent to react in accordance with the known means. This reaction can be conducted in a solvent having no active hydrogen or without solvent.

Methods which can be used for this reaction include the following: a) reaction is carried out between either an isocyanate monomer or an isocyanate adduct and a blocking agent in an NCO/blocking agent ratio (equivalent ratio) of about 0.9 to 1.1, preferably about 0.95 to 1.0; b) reaction is carried out between an isocyanate monomer and a blocking agent in an NCO/blocking agent ratio

(equivalent ratio) of about 1.1 to 3.0, preferably about 1.2 to 2.0, after which the resulting product is reacted with the said active hydrogen compound of low molecular weight and/or active hydrogen compound of high molecular weight; and c) reaction is carried out between an isocyanate monomer and an active hydrogen compound of low molecular weight and/or an active hydrogen compound of high molecular weight in an NCO/active hydrogen ratio of about 1.5 to 10.0, preferably about 2.0 to 7.0, after which the resulting product is reacted with a blocking agent. Well-known catalysts such as tertiary amine and organic metals can be used for the reaction.

It is recommended that the base copolymer and the hardener be mixed so that the equivalent ratio of active hydrogen groups in the base copolymer to regenerated isocyanate groups in the hardener is about 0.3 to 3.0, preferably about 0.5 to 2.0.

Epoxy compounds which can be used as a hardener include products of condensation between a phenolic compound and either epichlorohydrin or methylepichlorohydrin. Phenolic compounds which can be used in this case include bisphenols such as bisphenol A and bisphenol F; and novolak-type functional phenols obtained via condensation between formalin and either phenol or cresol.

The following compounds can also be used: polyglycidyl ethers of polyoxyalkylenepolyols such as polypropylene glycol; and glycidyl esters of aromatic or alicyclic polybasic acids, such as phthalic diglycidyl ester and tetrahydrophthalic diglycidyl ester.

When used for top coatings, an epoxy compound has an epoxy equivalent of about 500 or less, preferably about 100 to 300, and when used for undercoatings, adhesives, etc., it can have an epoxy equivalent of more than 500.

These compounds can be used either singly or in

combination.

It is recommended that the base copolymer and the hardener be mixed in a ratio of

$$\frac{\text{Number of hydrogen atoms in each amino group in the base copolymer}}{\text{Number of epoxy groups in the hardener}} = \text{about } 0.5 \text{ to } 3,$$

preferably about 1 to 2.

If necessary, stabilizers, fillers, etc. can also be added to a stabilized solution obtained in the manner described above.

The stabilized solution possesses highly improved storage stability, thus standing long-term storage; it works well for paints, adhesives, primers, etc.

Its adhesive property to various substances is further improved by adding a coupling agent. In addition, a paint film excellent in adhesion, water resistance, chemical resistance, and weatherproofness can be obtained by using both the present stabilized solution as the base resin and either a compound having at least 2 acryloyl groups in each molecule, a blocked polyisocyanate compound, or an epoxy compound as a hardener.

This invention is hereinafter described in more detail with some examples of its embodiment and of comparison. Part ratios and % ratios used hereinafter mean wt. parts and wt.%, respectively.

Example 1:

150 parts of a toluene/isopropanol (70/30) mixed solvent was placed in a reactor equipped with a thermometer, a stirrer, a dripping funnel, a reflux condenser, and a nitrogen introducing tube, and heated to about 80°C while introducing nitrogen, after which 30 parts of methyl methacrylate, 60 parts of butyl methacrylate, 10 parts of methacrylic acid, and 0.2 part of 2,2'-azobisisobutylylonitrile were added dropwise over a period of 6 hours. Two hours after the completion of the dripping, 0.07 part of 2,2'-azobisobutylonitrile in

solution in 10 parts of a toluene/isopropanol (70/30) mixed solvent was further added, and polymerization was continued for 4 more hours, yielding a polymer. The resulting polymer (precursor) had a non-volatile matter content of 38%, an acid milliequivalent of 1.45/g, and a weight-average molecular weight of about 70,000.

This polymer was then cooled to room temperature, and 5.5 parts of ethylenimine were added, 30 minutes after which the mixture was heated to 80°C to carry out reaction for 7 hours, yielding a solution of an amino-modified acrylic copolymer. After the completion of the reaction, the non-volatile residue was concentrated to 70% under reduced pressure to remove unreacted ethylenimine and then rediluted to 35% non-volatile matter content with a mixture of toluene and methyl ethyl ketone (3/1). The methyl ethyl ketone content of the solvent and the amino nitrogen content were 25% and 1.6%, respectively.

The resulting solution was then stored at 40°C for 6 months; its viscosity increased only by 15% during the storage.

Comparative Example 1:

An amino-modified acrylic copolymer was synthesized using toluene as a solvent for re-dilution in place of the solvent used in Example 1.

The viscosity of its solution increased to more than 3 times the initial viscosity during 6 months of storage at 40°C.

Examples 2 to 9:

Various amino-modified acrylic copolymer solutions were synthesized using the monomers, solvents, and molecular weights shown in Table 1.

Table 1

| | Precursor | | Solution of amino-modified acrylic copolymer | | | |
|---|---|---|---|---|---|---|
| | | | Solid content(%) | Ketone solvent | | Viscosity increase ratio2) |
| | Composition1) | Molecular weight ($\overline{Mw}$) | | Type1) | Ketone solvent content of the total solvent weight | |
| 2 | MMA/BMA/MAA 30/60/10 | 100,000 | 35 | MIBK | 60 | 115 |
| 3 | MMA/BMA/MAA 40/55/5 | 30,000 | 40 | MEK | 50 | 110 |
| 4 | MMA/BA/MAA 70/20/10 | 70,000 | 35 | MEK | 50 | 115 |
| 5 | MMA/BMA/MAA 70/20/10 | 70,000 | 35 | MIBK | 20 | 125 |

Table 1 (continued)

| | Precursor | | Solution of amino-modified acrylic copolymer | | | |
|---|---|---|---|---|---|---|
| | | | Solid content(%) | Ketone solvent | | Viscosity increase ratio2) |
| | Composition1) | Molecular weight ($\overline{Mw}$) | | Type1) | Ketone solvent content of the total solvent weight | |
| 6 | MMA/BMA/MAA 70/20/10 | 70,000 | 35 | MIBK | 50 | 115 |
| 7 | MMA/BMA/MAA 70/20/10 | 70,000 | 35 | MIBK | 80 | 105 |
| 8 | MMA/BMA/AA 70/20/10 | 70,000 | 35 | MIBK | 50 | 120 |
| 9 | MMA/BMA/MAA 85/5/10 | 30,000 | 35 | MAK | 40 | 115 |

Table 1

| | | |
|---|---|---|
| Note 1) | MMA | methyl methacrylate |
| | BMA | n-butyl methacrylate |
| | MAA | methacrylic acid |
| | BA | n-butyl acrylate |
| | AA | acrylic acid |
| | MEK | methyl ethyl ketone |
| | MIBK | methyl isobutyl ketone |
| | MAK | methyl n-amyl ketone |

2) Viscosity increase ratio =

$$\frac{\text{the viscosity during 6 months of storage at } 40°C \text{ (CP)}}{\text{the initial viscosity (CP)}} \times 100$$

Example 10:

A resin solution was synthesized in the same manner as in Example 1, in which the precursor had a composition of MMA/BMA/MAA=80/10/10 and a weight-average molecular weight of 40,000 and in which the solid content of the amino-modified acrylic copolymer and the MIBK content of the solvent were 35% and 40%, respectively. The viscosity increase ratio in this resin solution was 115% after 6 months of storage at 40°C.

Using sand mill, 20 parts of titanium dioxide and 10 parts of ethylene glycol monoethyl ether acetate were dispersed in 65 parts of the resulting resin solution, yielding white enamel. To this white enamel added was 5 parts of trimethylolpropane triacrylate as a hardener, after which the white enamel was applied to a mild steel plate so that the thickness of the baked film was 40 to 50 μm and allowed to harden at room temperature for 1 week. The resulting film exhibited excellent adhesion, chemical resistance (No change occurred when the film was either immersed in boiling water for 3 hours or immersed in 5% aq. sodium hydroxide for 120 hours), and solvent resistance (No change occurred when the film was

subjected either to rubbing 50 times with ethyl acetate or to immersion in lead-free gasoline for 120 hours). The film exhibited a gloss retention of 96% after 1,000 hours of irradiation using an accelerating weathering machine (Q panel Co., USA).

Example 11:

A resin solution was synthesized in the same manner as in Example 1, in which the precursor had a composition of ethyl methacrylate/methyl methacrylate/vinyl acetate = 62/7/31 and a weight-average molecular weight of 90,000 and in which the solid content of the amino-modified acrylic copolymer and the MIBK content of the solvent were 30% and 40%, respectively. The viscosity of this resin solution increased to only 110% even after 6 months of storage at 40°C.

To 100 parts of this resin solution was added 1.7 parts of γ-glycidoxypropyltrimethoxysilane, yielding an adhesive composition.

This adhesive composition was then applied to a cold-rolled steel plate (JIS G-3141) 1mm thick (dry-film thickness: 0.05mm) and dried at 50°C for 10 minutes. A flexible vinyl chloride sheet 0.2mm thick was placed over the adhesion surface and forced to adhere at 150°C and $2kg/cm^2$ for 5 minutes using a hot press. The film exhibited an initial 180°-peeling strength of 11kg/25cm; the retention ratio for the peeling strength was 91% after 1 hour of treatment with boiling water.

Example 12:

A resin solution was synthesized in the same manner as in Example 1, in which the precursor had a composition of MMA/BA/MAA=73/11/16 and a weight-average molecular weight of 18,000 and in which the solid content of the aminomodified acrylic copolymer and the MEK content of the solvent were

each 50%. In 43 parts of this resin solutiuon were dispersed 25 parts of titanium dioxide, 27 parts of a 60% solution in ethyl acetate of a polyisocyanate obtained via reaction between 3 mole of 1,3-bis (isocyanatomethyl) cyclohexane and 1 mole of trimethylolpropane, whose free isocyanato groups were previously blocked with 3 mole of methyl ethyl ketoxime, and 5 parts of xylene, using a ball mill, yielding white enamel. This white enamel was then applied to a mild steel plate so tht the thickness of the baked film was 40 to 50μm and baked at 110°C for 30 minutes.

The resulting paint film exhibited excellent adhesion, chemical resistance (No change occurred when the film was immersed in boiling water for 3 hours or in 5% aq. sodium hydroxide for 120 hours), and solvent resistance (No change occurred when the film was subjected to rubbing 50 times with ethyl acetate or to 120 hours of immersion in lead-free gasoline). The film exhibited a gloss retention of 94% after 700 hours of irradiation using an accelerating weathering machine (Q Panel Co., USA).

Example 13:

Using a ball mill, 19 parts of titanium dioxide was dispersed in 76 parts of the solution of an amino-modified acrylic copolymer, obtained in Example 1, and 5 parts of Epicoat 828 (Shell Chemical, epoxy equivalent = 190) was added.

The resulting mixture was then applied to a mild steel plate so that the thickness of the hardened film was 40 to 50 μm and baked at 120°C for 20 minutes. The resulting film exhibited a 2H pencil hardness and excellent chemical resistance (No change occurred when the film was either immersed in boiling water for 3 hours, immersed in 5% sulfuric acid at room temperature for 120 hours, or immersed in 5% aq. sodium hydroxide for 120

hours), solvent resistance (No change occurred when the film was subjected either to immersion in lead-free gasoline for 120 hours or to rubbing 50 times with ethyl acetate), and stain resistance (Magic Ink black, red). The film exhibited a gloss retention of 95% after 700 hours of irradiation using an accelerating weathering machine (Q Panel Co.).

Example 14:

Using a sand mill, 10 parts of trilead tetroxide was dispersed in 65 parts of the solution of an amino-modified acrylic copolymer, obtained in Example 1, yielding an enamel paint. After mixing with 25 parts of a 50% solution (xylene/MIBK = 50/50) of Epicoat 1001 (Shell Chemical, epoxy equivalent = 450), this enamel was applied to a mild steel plate so that the thickness of the baked film was 50 to 60μm and baked at 80°C for 30 minutes. The resulting film exhibited excellent recoatability and bending resistance; no change was found after immersion in a salt water (3W/V%, 96 hours).

Comparative Examples 2 to 6:

Various amino-modified acrylic copolymer solutions were synthesized using the monomers, solvents, and molecular weights shown in Table 2.

Table 2

| | Precursor | | Solution of amino-modified acrylic copolymer | | Viscosity increase ratio |
|---|---|---|---|---|---|
| | Composition | Molecular weight ($\overline{Mw}$) | Non-volatile matter content(%) | Solvent | |
| 2 | MMA/BMA/MAA 30/60/10 | 70,000 | 35 | Toluene/Isopropyl alcohol 70/30 | 350 |
| 3 | MMA/BMA/MAA 70/20/10 | 70,000 | 35 | Toluene/Isopropyl alcohol 50/50 | 300 |
| 4 | MMA/BMA/MAA 70/20/10 | 70,000 | 35 | Toluene/Xylene/Isopropyl alcohol 40/50/10 | 350 |
| 5 | MMA/BMA/MAA 60/30/10 | 80,000 | 35 | Toluene/Ethyl acetate/Isopropyl alcohol 30/60/10 | 250 |
| 6 | MMA/BA/MAA 60/30/10 | 80,000 | 35 | Toluene/Isopropyl alcohol 90/10 | 550 |

What is claimed is:

1. A stabilized solution of a copolymer composed of an aminoalkyl acrylate unit or aminoalkyl methacrylate unit and an ethylenically unsaturated monomer unit, which is prepared by dissolving the copolymer in a mixed solvent containing a ketone solvent in a ratio of about 20 to 80 wt.% to the total solvent weight.

2. The stabilized solution as claimed in claim 1, wherein the aminoalkyl acrylate unit or aminoalkylmethacrylate unit is one represented by the general formula:

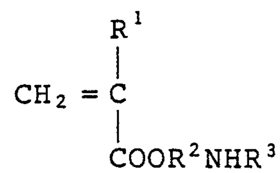

wherein $R^1$ represents either a hydrogen atom or a methyl group,

$R^2$ represents either an alkylene or hydroxyalkylene group having 1 to 6 carbon atoms, and

$R^3$ represents either a hydrogen atom or an alkyl group having 1 to 6 carbon atoms.

3. The stabilized solution as claimed in claim 1, wherein the copolymer exhibits a weight-average molecular weight of about 1,000 to 1,000,000.

4. The stabilized solution as claimed in claim 1, wherein the ketone solvent is contained in a ratio of about 30 to 70 wt.% to the total solvent weight.

5. The stabilized solution as claimed in claim 1, wherein the solid content of the solution is about 20 to 80 wt.%.

6. The stabilized solution as claimed in claim 1, wherein the ketone solvent is an aliphatic ketone.

7. The stabilized solution as claimed in claim 6, wherein the aliphatic ketone is methyl ethyl ketone or methyl isobutyl ketone.

8. The stabilized solution as claimed in claim 1, which further contains a silicon compound.

9. The stabilized solution as claimed in claim 8, wherein the silicon compound is γ-glycidoxy propyltrimethoxysilane.

10. The stabilized solution as claimed in claim 1, wherein the solution is used in combination with a hardener.

11. The stabilized solution as claimed in claim 10, wherein the hardner is a compound having at least 2 acryloyl groups in its molecule.

12. The stabilized solution as claimed in claim 11, wherein the compound is trimethylolpropane triacrylate.

13. The stabilized solution as claimed in claim 10, wherein the hardner is a blocked polyisocyanate compound.

14. The stabilized solution as claimed in claim 10, wherein the hardner is an epoxy compound.